# EUROPEAN PATENT SPECIFICATION

(11) **EP 2 634 424 B1**
(45) Date of publication and mention of the grant of the patent: **31.05.2017**
(21) Application number: 13156495.7
(22) Date of filing: 25.02.2013
(51) Int. Cl.: E02D 27/42

(54) **Method of constructing a foundation for tower-like structure**
Verfahren zum Konstruieren eines Fundaments für eine turmartige Struktur
Procédé de construction de fondation de structure de type tour

(30) Priority: 28.02.2012 FI 20125221
(43) Date of publication of application: 04.09.2013
(73) Proprietor: Finnish Sea Service Oy, 26100 Rauma (FI)
(72) Inventor: Jouko, Kiiski, 26100 Rauma (FI)
(74) Representative: Kolster Oy Ab

(56) References cited:
- DE-A1-102010 032 259

## Description

The invention relates to a method of constructing a foundation for a tower-like structure in a water area, wherein a base part of the foundation is supported against a bottom and the base part is provided with an upwards-oriented part which extends above water level and to which a lower part of the tower-like structure is fastened, such as generally known from DE 10 2010 032259 A.

The invention relates to constructing tower-like structures in water areas. An example of such structures is construction of a wind power station at sea. Wind conditions make it advantageous to construct wind power plants in sea areas. Sea areas are advantageous for wind power plants since wind power plants located in sea areas are far from areas the wind power plants might disturb. An example of areas the wind power plants might disturb are residential areas. Sea areas are also large, so these areas may preferably be provided with a great number of wind power plants.

In practice, however, the execution of installation work of wind power plants in sea areas far from the mainland, often beyond shoaly waters, is a very challenging task. The installation work has to be designed and carried out taking the existing swell and wind conditions at sea into account. Eventually, it is the equipment available, execution of logistics, organization and execution of work that determine the efficiency and costs of the installation work.

The installation costs for wind power plants in sea conditions are highly dependent on the lifting and transportation capacity needed. The massiveness of the base part of the foundation in particular easily requires a very high lifting capacity during installation. It is very challenging to handle and transport the large and massive base part in sea conditions. It is also to be noted that the installation accuracy for the wind power plant becomes more and more difficult to achieve as the weight and size of the base part increase. The weather limits required for installation become stricter as the installation time increases and the work becomes more difficult.

In a typical offshore wind power plant, the massive base part of the foundation is constructed on the mainland and, once fully completed, transported to the installation site and installed in a bed evened out for the purpose in the seabed. A part which ends above water level, at a height of about 10 to 15 metres, is connected to the base. The aforementioned part is e.g. a tubular part. Typically, a tower of a wind power plant is fastened by means of a flange connection to the aforementioned tubular part. Various platforms, e.g. a working platform and dock structures for service, are connected to the tubular part connected to the base. In icy sea conditions, e.g. in Finland and Sweden, a cone for reducing ice loads is usually connected to the tubular part connected to the base.

The base of the wind power plant has to be massive and its bottom area should be large enough for the wind power plant to remain standing even in the most forceful wave, flow, wind and ice conditions in the installation area. The tipping moment and shear force imposed on the base are highly dependent on the capacity of the wind power plant and the height of the tower. An example of the size of a tower of a wind power plant is the tower of a 2.3 MW wind power plant, which has a height of about 70 m. Another example is the tower of a 3.6 MW wind power plant, which has a height of about 90 m. On their part, the aforementioned examples clearly show that in practice the size and dimensions of a base part to be placed in the seabed are very large. It is very laborious to move such parts, once completed, from the place of manufacture to the site of installation and handle the parts during installation, necessitating the use of a special technique.

The aforementioned issues lead to the problems with logistics mentioned above, which highly increase the installation costs since in connection with the above-described prior art it is necessary to use very large means of transportation, e.g. barges or rafts, and extremely large and highly expensive cranes as well.

An object of the invention is to provide a method which enables drawbacks of the prior art to be eliminated. This is achieved by a method according to the invention. The method according to the invention is characterized by transporting the steel structures of the base part and the tubular part to an installation site of the tower-like structure, installing the base part by embedding the base part into the bottom and lowering the tubular part to the bottom, arranging it in the base part provided in the bottom and straightening it into an upright position, fastening the tubular part to the base part by means of grouting and filling the base part in the bottom with concrete and covering it with ballast, crushed stone and/or earth masses.

Above all, the advantage provided by the invention is that a wind power plant is now very inexpensive to install at sea as compared with the prior art technology. A further advantage of the invention is that the invention enables a very strong and also a very durable foundation to be achieved which may also be utilized after the original wind turbine has been removed from use and a new turbine is being installed in place.

In the following, the invention will be explained in closer detail by means of an exemplary embodiment described in the attached drawing, in which
Figures 1 and 2 are schematic views showing transportation of steel structures of a foundation for a tower-like structure to an installation site,
Figure 3 is a schematic view showing a base part in a bottom of a sea, installed on a broken rock bed and a ballast levelling,
Figure 4 is a schematic view showing a base part located in a seabed, installed to rest in an installation pit and on a ballast levelling,
Figures 5 and 6 are schematic views showing embedment of the base part into the bottom, into the pit and on the ballast levelling and on the broken rock bed, respectively,
Figures 7 and 8 are schematic views showing submersion of the tubular part so as to rest on the base part, on the base part installed according to Figure 5 and Figure 6, respectively, and
Figure 9 is a schematic view showing a foundation constructed by means of the method according to the invention.

The invention relates to constructing a foundation for a tower-like structure in a water area. In such a foundation, a base part of the foundation is supported against a bottom and the base part is provided with an upwards-oriented part which extends above water level and to which a lower part of the tower-like structure is fastened. The tower-like structure may be e.g. a wind power plant, as mentioned above.

According to the basic idea of the invention, the steel structures of the base part and the tubular, preferably double-shell, part serving as an upwards-oriented part are manufactured on the mainland and reinforced to be ready for concrete pouring. In shallow installation sites, the tubular part may also be a single-shell tubular part. The steel structure of the base part is preferably a so-called gravity-hexagon flange which during installation is filled with concrete and covered with ballast and broken rock, for instance.

The base part and the tubular part are transported as separate parts to the installation site. The base part is installed by embedding the base part into the bottom, and the tubular part is lowered to the bottom, arranged in the base part provided in the bottom and straightened into an upright position. The tubular part is fastened to the base part by means of grouting, and the base part in the bottom is filled with concrete and covered with ballast, crushed stone and/or earth masses.

The manufacture and reinforcement of the steel structures of the base part and the tubular part may be carried out in a normal manner conventional to those skilled in the art, on the mainland located e.g. logistically advantageously with respect to the installation site. The steel parts formed as uniform parts on the mainland are transported. The steel parts may be floating structures, which enables them to be moved to the installation site by small towboats. The steel structures may be made floating by means of suitable compartment structures, in which case the compartment structures also ensure stability of the steel structure during transportation and the actual installation as well.

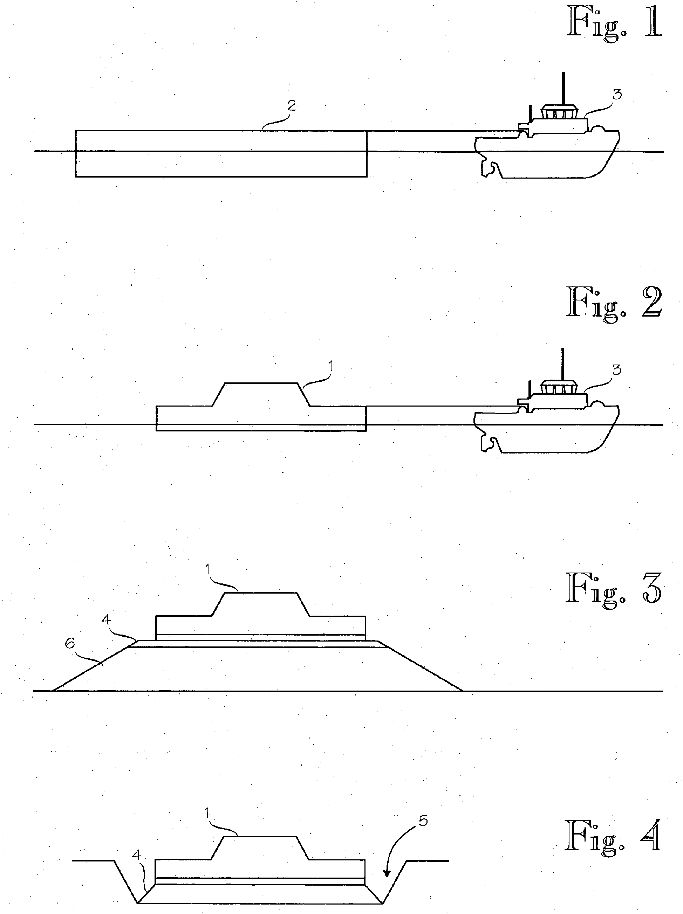

Figures 1 and 2 schematically show a situation wherein floating steel structures of a base part, i.e. a steel structure 1 of the base part and a steel structure 2 of a tubular part, are being towed by a towboat 3. Both steel structures 1 and 2 are uniform pieces. It is also possible that the steel structure 1 of the base has first been manufactured as separate parts to be combined into a uniform piece on the mainland. Such a solution is sometimes advantageous e.g. when the base part is very large. Naturally, barges and/or rafts towed by a towboat may also be used for transportation when necessary. Such barge or raft transportation is sometimes advantageous in connection with a small base part, for instance.

It is possible to provide the steel structures 1 of even a large base part by relatively small towboats 2, and intermediate storage of the steel structures in the installation site that may be necessary is simple.

The installation work takes place by embedding first the base part 1 into an installation pit 5 that has been dredged in the seabed and evened out by a ballast levelling 4, for instance. This phase is schematically shown in Figure 4. The base part 1 may also be installed in the bottom so as to rest on a broken-rock bed 6 and a ballast levelling 4, as shown in Figure 3.

The installation of the base part 1 in the bottom may be carried out by a relatively small crane 7, as compared with the cranes used in connection with the prior art. An example is an approximately 50 to 150 t crane, i.e. the installation work for the foundation may be carried out using the same crane as that used for installing the actual wind power plant, i.e. a tower and a generator/turbine part. Thus, in connection with the invention, only one relatively small crane will suffice whereas earlier, in connection with the prior art, a very large and expensive crane has been necessary for erecting the robust base part.

Naturally, in connection with the above-described installation work, ballasting is utilized when necessary to achieve sufficient stability. In order to achieve additional stability possibly necessary in some phase, it is also possible to use nylon stretchers. After the base has been brought down, its lower part is filled with concrete.

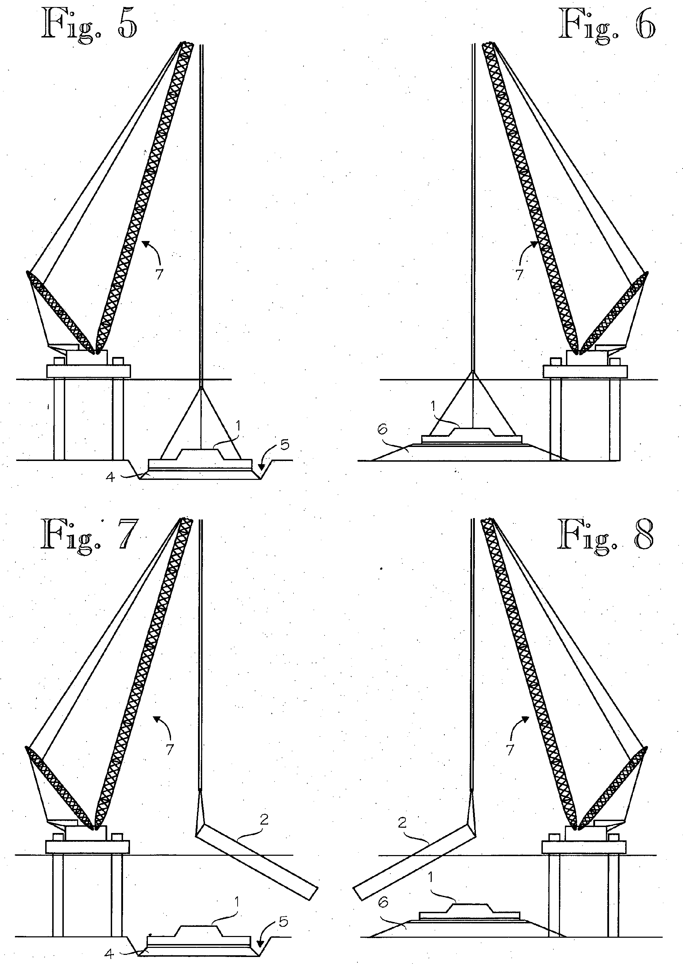

The tubular part 2 to be fastened to the base part is transported to the installation site, as shown in Figure 1. A lower part of the tubular part 2 is brought down onto a collar provided in the base part. This work phase is schematically shown in Figure 7 in a situation wherein the base part has been installed, as shown in Figure 5, to rest in the installation pit and on the ballast levelling. Preferably, the tubular part 2 is a double-shell cylindrical part, as mentioned above. The tubular part 2 is turned into the base part located in the bottom, and the position is straightened so that the tubular part 2 adopts an upright position, an upper end of the tubular part 2 thus residing above water level. The upright position of the tubular part 2 may be adjusted by any suitable means, e.g. hydraulic cylinders, so as to achieve the accuracy required by a wind power plant.

The above-described operation phase is as described above also when the base part 1 is supported against the bottom, on the broken-rock bed 6. Such a situation is schematically shown in Figure 8.

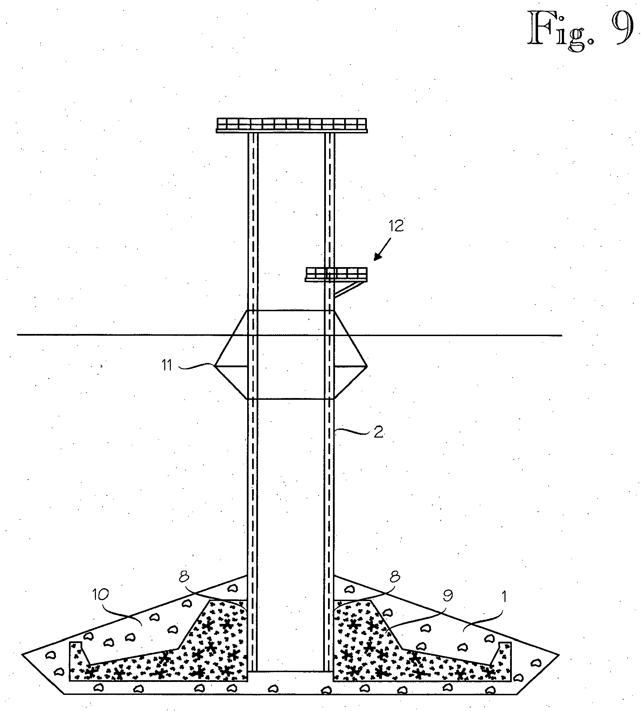

Figure 9 shows a foundation constructed in the aforementioned manner. The base part 1 and the tubular part 2 are interconnected by means of grouting 8. The filling of the base part with concrete is indicated by reference number 9 in Figure 9. If the tubular part 2 is a double-shell structure, a reinforced gap between the shells of the tubular part is next filled with concrete by means of dry casting in order to ensure the quality of concrete in the connection area and to guarantee the strength of the connection area.

The inside of the tubular part is filled with concrete to a height of the collar of the base part. This enables transmission of loads between the base part and the tubular part to be ensured in all cases in the best possible manner. When the connection between the base part and the tubular part is implemented in the aforementioned manner, the strength thereof corresponds to the strength achieved when fastening a monopile to a bedrock.

After installation and concrete pouring of the base 1 and the tubular part 2, the base part 1 is covered with ballast and crushed stone and/or another soil material 10. An increase in the weight of the foundation increases its load capacity. The purpose of the filling is also to serve as protection against erosion.

Often the foundation also includes e.g. an ice cone 11 to be installed substantially at the water surface level. The ice cone is formed from steel parts and filled with concrete. The ice cone is assembled before being installed in the installation site. Finally, service platforms, docks and other necessary platform structures 12 may also be installed as well as cables be drawn. Next, the installation work may continue by installing the tower and wind turbine of the wind power plant, electric installations, and commissioning of the wind power plant.

The method according to the invention enables the installation project to be executed in a flexible manner. The steel structures are manufactured on the mainland and reinforced to be ready for concrete pouring. The steel work may be carried out on any shore having a waterway to the installation site. The transportation to the installation site may be carried out as wet towing, as shown in Figures 1 and 2, or as barge or ship transportation when the weight of the parts is sufficiently small. In wet towing, the steel structures are divided into stable compartments that float during towing. The draught required of a route is approximately 3 m and the width of the route has to correspond to the diameter of the base part. When necessary, the steel parts of the base structure and/or the tubular part may be stored while they are floating anchored or embedded into the seabed before installation. No high lifting capacity is needed during installation. The installation may be carried out using the same crane as that used for installing the tower and the wind turbine of the wind power plant itself.

In view of the above, it is to be noted that the massiveness of the foundation required by the wind power plant is achieved cost-efficiently by means of the steel structures, concrete, and earth masses. The high installation accuracy required by the wind power plant is readily achieved by means of the invention when the tubular part is adjusted accurately into a correct position by utilizing e.g. hydraulics prior to interconnecting the tubular part and the base part.

The invention further enables a considerably long service life to be achieved for the foundation. A wind turbine has an approximately 20-year service life, and the purpose is that after that time the turbine is replaced by a new one. The foundation thus has to outlast at least two turbines and have a service life of about 50 years. It is perfectly possible to place a new mould around an already existing foundation and to enlarge the foundation by casting. This enables the old turbine to be replaced by a considerably larger one in the renewed base with marginal costs. It is also feasible that the same arrangement enables the service life of the foundation to be extended.

The invention has been disclosed above with reference to a wind power plant. However, the invention is by no means restricted to wind power plants exclusively but within the scope of the attached claims the invention may be freely applied to tower-like structures of all kinds. Examples thereof include different masts, pillars of bridges, and other corresponding tower-like structures.

## Claims

1. A method of constructing a foundation for a tower-like structure in a water area, wherein a base part (1) of the foundation is supported against a bottom and the base part is provided with an upwards-oriented part which extends above water level and to which a lower part of the tower-like structure is fastened and wherein steel structures of the base part (1) and the tubular part (2) serving as a part oriented upwards from the base part are manufactured on the mainland as uniform parts and reinforced to be ready for concrete pouring, **characterized by** transporting the steel structures of the base part (1) and the tubular part (2) to an installation site of the tower-like structure, installing the base part (1) by embedding the base part into the bottom and lowering the tubular part (2) to the bottom, arranging it in the base part provided in the bottom and straightening it into an upright position, fastening the tubular part (2) to the base part by means of grouting and filling the base part (1) in the bottom with concrete and covering it with ballast, crushed stone and/or earth masses (10).

2. A method as claimed in claim 1, **characterized by** fastening, by means of grouting, the tubular part (2) to a collar provided in the base part (1), filling, by means of dry casting, reinforcement of the tubular part (2) with concrete, and filling the inside of the tubular part (2) with concrete up to an upper part of the collar of the base part (1).

3. A method as claimed in claim 1 or 2, **characterized by** forming the steel structures of the base part (1) as several separate parts to be combined with one another on the mainland before embedding the base part.

4. A method as claimed in any one of claims 1 to 3, **characterized by** installing in the tubular part (2) an ice cone (7) at water level and necessary platform structures (12) above water level.

## Patentansprüche

1. Verfahren zum Konstruieren eines Fundamentes für eine turmartige Struktur in einem wasserreichen Gebiet, wobei ein Basisteil (1) des Fundamentes gegen einen Boden abgestützt ist und der Basisteil mit einem nach oben ausgerichteten Teil versehen ist, der sich über das Wasserniveau hinaus erstreckt und an dem ein unterer Teil der turmartigen Struktur befestigt ist und wobei Stahlstrukturen des Basisteils (1) und des rohrförmigen Teils (2), der als Teil dient, der nach oben vom Basisteil aus ausgerichtet ist, auf dem Festland als gleichförmige Teile hergestellt und so verstärkt werden, dass sie bereit zum Betongießen sind, **gekennzeichnet durch** Transportieren der Stahlstrukturen des Basisteils (1) und des rohrförmigen Teils (2) zu einem Installationsort der turmartigen Struktur, Installieren des Basisteils (1) durch Einbetten des Basisteils in den Boden und Absenken des rohrförmigen Teils (2) zum Boden, Anordnen desselben im Basisteil, der im Boden vorgesehen ist, und Strecken desselben in eine aufrechte Position, Befestigen des rohrförmigen Teils (2) am Basisteil mittels Verpressen und Füllen des Basisteils (1) im Boden mit Beton und Abdecken desselben mit Ballast, Schotter und/oder Erdmassen (10).

2. Verfahren nach Anspruch 1, **gekennzeichnet durch** Befestigen des rohrförmigen Teils (2), durch Verpressen, an einem Bund, der im Basisteil (1) vorgesehen ist, durch Trockengießen Füllen der Verstärkung des rohrförmigen Teils (2) mi Beton und Füllen der Innenseite des rohrförmigen Teils (2) mit Beton bis zu einem oberen Teil des Bundes des Basisteils (1).

3. Verfahren nach Anspruch 1 oder 2, **gekennzeichnet durch** Bilden von Stahlstrukturen des Basisteils (1) als mehrere getrennte Teile, die miteinander auf dem Festland kombiniert werden sollen, bevor sie das Basisteil einbetten.

4. Verfahren nach einem der Ansprüche 1 bis 3, **gekennzeichnet durch** Installieren, im rohrförmigen Teil (2), eines Eiskonus (7) auf Wasserhöhe und von notwendigen Plattformstrukturen (12) oberhalb des Wasserniveaus.

## Revendications

1. Procédé de construction d'une fondation pour une structure en forme de tour dans une zone d'eau, dans lequel une partie de base (1) de la fondation est supportée contre un fond et la partie de base est pourvue d'une partie orientée vers le haut qui s'étend au-dessus du niveau d'eau et à laquelle une partie inférieure de la structure en forme de tour est fixée, et dans lequel des structures d'acier de la partie de base (1) et de la partie tubulaire (2) servant de partie orientée vers le haut depuis la partie de base sont fabriquées sur la terre ferme sous l'aspect de parties uniformes et sont renforcées pour être prêtes à un bétonnage, **caractérisé par** le transport des structures d'acier de la partie de base (1) et de la partie tubulaire (2) dans un site d'installation de la structure en forme de tour, l'installation de la partie de base (1) en noyant la partie de base dans le fond et en abaissant la partie tubulaire (2) vers le fond, son aménagement dans la partie de base disposée dans le fond et son redressement en position verticale, la fixation de la partie tubulaire (2) à la partie de base au moyen de mortier et le remplissage de la partie de base (1) dans le fond avec du béton et son recouvrement par des masses de ballast, de pierres broyées et/ou de terre (10).

2. Procédé selon la revendication 1, **caractérisé par** la fixation, au moyen de mortier, de la partie tubulaire (2) à un collier disposé dans la partie de base (1), le remplissage au moyen d'une coulée à sec, le renforcement de la partie tubulaire (2) par du béton et le remplissage de l'intérieur de la partie tubulaire (2) par du béton jusqu'à une partie supérieure du collier de la partie de base (1).

3. Procédé selon la revendication 1 ou 2, **caractérisé par** la formation des structures d'acier de la partie de base (1) en diverses parties séparées à combiner l'une à l'autre sur la terre ferme avant de noyer la partie de base.

4. Procédé selon l'une quelconque des revendications 1 à 3, **caractérisé par** l'installation dans la partie tubulaire (2) d'un cône anti-glace (7) au niveau de l'eau et des structures de plateforme nécessaires (12) au-dessus du niveau de l'eau.
